# EUROPEAN PATENT APPLICATION

(11) **EP 4 261 974 A1**
(43) Date of publication of application: **18.10.2023**
(21) Application number: 22917648.2
(22) Date of filing: 13.01.2022
(51) Int. Cl.: H01M 10/0525

(54) **BATTERY CELL, BATTERY, ELECTRICAL DEVICE, AND FABRICATION METHOD AND DEVICE FOR BATTERY CELL**

(71) Applicant: Contemporary Amperex Technology Co., Limited, Ningde, Fujian 352100 (CN)
(72) Inventor: ZHOU, Wenlin, Ningde, Fujian 352100 (CN); CHEN, Shengwang, Ningde, Fujian 352100 (CN); WU, Ningsheng, Ningde, Fujian 352100 (CN); BAI, Lulu, Ningde, Fujian 352100 (CN); LI, Quankun, Ningde, Fujian 352100 (CN); WANG, Peng, Ningde, Fujian 352100 (CN)
(74) Representative: Thoma, Michael
(86) International application number: PCT/CN2022/071898
(87) International publication number: WO 2023/133777

(57) **Abstract**

The embodiments of the present application relate to the technical field of batteries, and provide a battery cell, a battery, a power consuming apparatus, and a method and apparatus for manufacturing the battery cell. The battery cell includes a housing, an electrode assembly, and an end cap. The electrode assembly is accommodated in the housing. The end cap is configured to cover an opening of the housing. The end cap includes a first body portion and a first protrusion. The first body portion surrounds an edge of the first protrusion and is configured to be connected to the housing, the first protrusion protrudes relative to the first body portion in a direction away from the electrode assembly in a thickness direction of the end cap, and a first accommodating space is formed inside the first protrusion and is configured to accommodate at least a part of a tab of the electrode assembly. The first body portion is provided with a reinforcement portion, the reinforcement portion being configured to enhance the stiffness of the first body portion. By means of the reinforcement portion, resistance to deformation of the first body portion is enhanced, and the risk of short circuits of positive and negative electrodes due to a large deformation of the first body portion caused by an external force is reduced, thereby effectively improving safety of the battery cell.

## Description

### Technical Field

The present application relates to the technical field of batteries, and in particular, relates to a battery cell, a battery, a power consuming apparatus, and a method and apparatus for manufacturing the battery cell.

### Background Art

With the development of new energy technology, batteries are used more widely, such as mobile phones, notebook computers, electric mopeds, electric vehicles, electric aircraft, electric ships, electric toy vehicles, electric toy ships, electric toy aircrafts, and electric tools.

In battery technology, in addition to performance, safety of battery cells also needs to be considered. Therefore, how to improve the safety of the battery cells is an urgent problem to be solved in the battery technology.

### Summary of the Invention

The embodiments of the present application provide a battery cell, a battery, a power consuming apparatus, and a method and apparatus for manufacturing the battery cell, which can effectively improve the safety of the battery cell.

According to a first aspect, an embodiment of the present application provides a battery cell, including: a housing provided with an opening; an electrode assembly accommodated in the housing and provided with a tab; and an end cap configured to cover the opening, the end cap comprising a first body portion and a first protrusion, the first body portion surrounding an edge of the first protrusion and being configured to connected to the housing, the first protrusion protruding relative to the first body portion in a direction away from the electrode assembly in a thickness direction of the end cap, and a first accommodating space being formed inside the first protrusion and being configured to accommodate at least a part of the tab, wherein the first body portion is provided with a reinforcement portion, the reinforcement portion being configured to enhance the stiffness of the first body portion.

In the above technical solution, the first body portion of the end cap is provided with the reinforcement portion, which improves the stiffness of the first body portion, enhances resistance to deformation of the first body portion, and reduces the risk of short circuits of positive and negative electrodes due to a large deformation of the first body portion caused by an external force, thereby effectively improving the safety of the battery cell.

In some embodiments, the first body portion has a second surface opposite a first surface in the thickness direction of the end cap; and the reinforcement portion protrudes from the first surface, the first body portion is provided with a first recess at a position corresponding to the reinforcement portion, and the first recess is recessed from the second surface in a direction from the second surface to the first surface.

In the above technical solution, the first body portion is provided with the first recess at the position corresponding to the reinforcement portion, so that the stiffness of the first body portion can be effectively improved. During forming, the first recess and the reinforcement portion may be formed by means of stamping, that is, the reinforcement portion protruding from the first surface is formed while the first recess is formed on the second surface by means of stamping.

In some embodiments, the first recess partially extends beyond the first surface in the direction from the second surface to the first surface.

In the above technical solution, the first recess partially extends beyond the first surface so that the first recess is partially recessed into the reinforcement portion, thereby increasing a recess depth of the first recess, and enabling the first recess to provide more deformation space for the reinforcement portion.

In some embodiments, the first surface is an inner surface of the first body portion facing the electrode assembly, and the second surface is an outer surface of the first body portion facing away from the electrode assembly.

In the above technical solution, the first surface is the inner surface of the first body portion, that is, the reinforcement portion protrudes from the inner surface of the first body portion, and the reinforcement portion is located inside the battery cell and does not occupy an external space of the battery cell, thereby reducing a volume of the battery cell.

In some embodiments, the second surface is an inner surface of the first body portion facing the electrode assembly, and the first surface is an outer surface of the first body portion facing away from the electrode assembly.

In the above technical solution, the first surface is the outer surface of the first body portion, that is, the reinforcement portion protrudes from the outer surface of the first body portion, and the reinforcement portion is located outside the battery cell and does not occupy an external space of the battery cell, so that more space is available for the electrode assembly, facilitating the improvement of energy density of the battery cell. In addition, since the second surface is the inner surface of the first body portion, the first recess is recessed from the inner surface of the first body portion in a direction from the inner surface to the outer surface of the first body portion, the first recess can provide a deformation space for the reinforcement portion, and even if the reinforcement portion is greatly deformed inward due to an impact, it is less prone to damage to the electrode assembly, further reducing the risk of short circuits of positive and negative electrodes.

In some embodiments, the first protrusion includes an end wall and a peripheral wall; the end wall is further away from the electrode assembly than the first body portion in the thickness direction of the end cap; and the peripheral wall surrounds an edge of the end wall and is connected to the first body portion, and the peripheral wall and the end wall together define the first accommodating space.

In the above technical solution, the peripheral wall and the end wall together define the first accommodating space, and the end wall is further away from the electrode assembly than the first body portion. This structure expands the first accommodating space and enables the first accommodating space to accommodate more part of the tab of the electrode assembly, thereby facilitating the improvement of energy density of the battery cell.

In some embodiments, the first body portion has a thickness greater than that of the end wall; and/or, the first body portion has a thickness greater than that of the peripheral wall.

In the above technical solution, the first body portion has a thickness greater than that of the end wall, so that the first body portion has a stronger resistance to deformation than the end wall and is less prone to deformation. Similarly, the first body portion has a thickness greater than that of the peripheral wall, so that the first body portion has a stronger resistance to deformation than the peripheral wall and is less prone to deformation.

In some embodiments, the battery cell further includes an electrode terminal, the electrode terminal being configured to be electrically connected to the tab and being arranged on the end wall.

In the above technical solution, the electrode terminal of the battery cell is arranged on the end wall, and the electrode terminal does not occupy the space of the first body portion, thereby facilitating the arrangement of the reinforcement portion on the first body portion and improving the stiffness of the first body portion.

In some embodiments, the first body portion comprises two first edge portions and two second edge portions, the two first edge portions being respectively located on two sides of the first protrusion in a length direction of the end cap, the two second edge portions being respectively located on two sides of the first protrusion in a width direction of the end cap, and the first edge portion having a dimension in the length direction larger than the dimension of the second edge portion in the width direction, wherein at least one of the first edge portions is provided with the reinforcement portion.

In the above technical solution, since the first edge portion has a dimension in the length direction of the end cap larger than the dimension of the second edge portion in the width direction of the end cap, the first edge portion is more prone to deformation than the second edge portion. Thus, at least one of the first edge portions is provided with the reinforcement portion to enhance the stiffness of the first edge portion.

In some embodiments, each of the two first edge portions is provided with the reinforcement portion.

In the above technical solution, each of the two first edge portions is provided with the reinforcement portion, thereby improving the stiffness of the two first edge portions and making the parts of the end cap located on two sides of the first protrusion in the length direction of the end cap less prone to deformation.

In some embodiments, the reinforcement portion extends in the width direction.

In the above technical solution, the reinforcement portion extends in the width direction of the end cap, thereby increasing the span of the reinforcement portion in the width direction of the end cap, and further improving the stiffness of the first edge portion.

In some embodiments, the battery cell further includes an insulator, the insulator being located on the side of the electrode assembly facing the end cap for insulating the end cap from the electrode assembly.

In the above technical solution, the insulator is arranged between the end cap and the electrode assembly, thus realizing insulation between the end cap and the electrode assembly and reducing the risk of short circuits of positive and negative electrodes due to overlapping between the electrode assembly and the end cap.

In some embodiments, in the thickness direction of the end cap, a second recess is provided on the side of the insulator facing the first body portion at a position corresponding to the reinforcement portion.

In the above technical solution, the second recess on the insulator can provide a deformation space for the reinforcement portion to deform toward the interior of the battery cell, reducing the risk of short circuits of positive and negative electrodes caused by the deformation of the reinforcement portion, which results in pressing the insulator and then damage to the electrode assembly by the insulator.

In some embodiments, the insulator includes a second body portion and a second protrusion; the second body portion surrounds an edge of the second protrusion, in the thickness direction of the end cap, the second body portion is located on the side of the first body portion facing the electrode assembly , and the second protrusion protrudes relative to the second body portion in the direction away from the electrode assembly, the second protrusion is at least partially accommodated in the first accommodating space, and a second accommodating space is formed inside the second protrusion and is configured to accommodate at least a part of the tab; and the second recess is arranged on the second body portion, the second body portion has a third surface facing the first body portion in the thickness direction of the end cap, and the second recess is recessed from the third surface toward the electrode assembly.

In the above technical solution, the second protrusion of the insulator is at least partially accommodated in the first accommodating space, which reduces the overall dimension of the insulator and the end cap in the thickness direction of the end cap, making the structure of the insulator and the end cap more compact. The second accommodating space is formed inside the second protrusion, and at least a part of the tab is accommodated in the second accommodating space, so that the space inside the housing occupied by the tab is reduced and more space is available for a main body portion of the electrode assembly, thereby facilitating the improvement of energy density of the battery cell.

According to a second aspect, an embodiment of the present application provides a battery, including: a battery cell provided in any one of the embodiments in the first aspect; and a case configured to accommodate the battery cell.

According to a third aspect, an embodiment of the present application provides a power consuming apparatus, including a battery provided in any one of the embodiments in the second aspect.

According to a fourth aspect, an embodiment of the present application provides a method for manufacturing a battery cell. The method includes: providing a housing provided with an opening; providing an electrode assembly provided with a tab; providing an end cap; accommodating the electrode assembly in the housing; and covering the opening with the end cap, wherein the end cap comprises a first body portion and a first protrusion, the first body portion surrounds an edge of the first protrusion and is configured to be connected to the housing, the first protrusion protrudes relative to the first body portion in a direction away from the electrode assembly in a thickness direction of the end cap, a first accommodating space is formed inside the first protrusion and is configured to accommodate at least a part of the tab, and the first body portion is provided with a reinforcement portion, the reinforcement portion being configured to enhance the stiffness of the first body portion.

According to a fifth aspect, an embodiment of the present application provides an apparatus for manufacturing a battery cell, the apparatus including: a first provision device configured to provide a housing provided with an opening; a second provision device configured to provide an electrode assembly provided with a tab; a third provision device configured to provide an end cap; and an assembly device configured to accommodate the electrode assembly in the housing, and further configured to cover the opening with the end cap, wherein the end cap comprises a first body portion and a first protrusion, the first body portion surrounds an edge of the first protrusion and is configured to be connected to the housing, the first protrusion protrudes relative to the first body portion in a direction away from the electrode assembly in a thickness direction of the end cap, a first accommodating space is formed inside the first protrusion and is configured to accommodate at least a part of the tab, and the first body portion is provided with a reinforcement portion, the reinforcement portion being configured to enhance the stiffness of the first body portion.

### Brief Description of the Drawings

In order to more clearly describe the technical solutions of the embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is a schematic structural diagram of a vehicle according to some embodiments of the present application;
FIG. 2 is an exploded view of a battery according to some embodiments of the present application;
FIG. 3 is a schematic structural diagram of a battery cell according to some embodiments of the present application;
FIG. 4 is a cross-sectional view of the battery cell shown in FIG. 3;
FIG. 5 is a schematic structural diagram of an end cap according to some embodiments of the present application;
FIG. 6 is a cross-sectional view of the end cap shown in FIG. 5;
FIG. 7 is a schematic structural diagram of an end cap according to some other embodiments of the present application;
FIG. 8 is a cross-sectional view of the end cap shown in FIG. 7;
FIG. 9 is an assembly diagram of an end cap and an electrode terminal according to some embodiments of the present application;
FIG. 10 is an assembly diagram of an end cap and an electrode terminal according to some other embodiments of the present application;
FIG. 11 is an exploded view of an end cap and an insulator according to some embodiments of the present application;
FIG. 12 is an exploded view of an end cap and an insulator according to some other embodiments of the present application;
FIG. 13 is a flow chart of a method for manufacturing a battery cell according to some embodiments of the present application; and
FIG. 14 is a schematic block diagram of an apparatus for manufacturing a battery cell according to some embodiments of the present application.

List of reference signs: 10 - Case; 11 - First portion; 12 - Second portion; 20 - Battery cell; 21 - Housing; 22 - Electrode assembly; 221 - Tab; 23 - End cap; 231 - First body portion; 2311 - First surface; 2312 - Second surface; 2313 - First edge portion; 2314 - Second edge portion; 232 - First protrusion; 2321 - End wall; 2322 - Peripheral wall; 233 - First accommodating space; 234 - Reinforcement portion; 235 - First recess; 2351 - First bottom surface; 24 - Electrode terminal; 25 - Pressure relief mechanism; 26 - Insulator; 261 - Second recess; 262 - Second body portion; 2621 - Third surface; 263 - Second protrusion; 100 - Battery; 200 - Controller; 300 - Motor; 1000 - Vehicle; 2000 - Manufacturing apparatus; 2100 - First provision device; 2200 - Second provision device; 2300 - Third provision device; 2400 - Assembly device; X - Length direction; Y - Width direction; Z - Thickness direction.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Obviously, the embodiments described are some of, rather than all of, the embodiments of the present application. All the other embodiments obtained by those of ordinary skill in the art based on the embodiments of the present application without any creative effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skills in the art, the specific meaning of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

"A plurality of' appearing in the present application means two or more (including two).

In the present application, a battery cell may include a lithium-ion secondary battery, a lithium-ion primary battery, a lithium-sulfur battery, a sodium/lithium-ion battery, a sodium-ion battery or a magnesium-ion battery, etc., which will not limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which will also not be limited in the embodiments of the present application.

A battery mentioned in the embodiments of the present application refers to a single physical module including one or more battery cells to provide a high voltage and capacity. For example, the battery mentioned in the present application may include a battery module, a battery pack, etc. The battery generally includes a case for packaging one or more battery cells. The case can prevent liquid or other foreign matters from affecting charging or discharging of a battery cell.

The battery cell includes an electrode assembly and an electrolyte. The electrode assembly is composed of a positive electrode plate, a negative electrode plate and a separator. The battery cell operates mainly by relying on movements of metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab. Taking a lithium-ion battery as an example, the material of the positive electrode current collector may be aluminum, and the positive electrode active material may be lithium cobalt oxides, lithium iron phosphate, ternary lithium or lithium manganate, etc. The negative electrode plate includes a negative electrode current collector and a negative electrode active material layer. A surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative tab. The negative electrode current collector may be made of copper, and the negative electrode active material may be carbon, silicon, etc. In order to ensure that no fusing occurs when a large current passes, there are multiple positive tabs stacked together, and there are multiple negative tabs stacked together. The separator may be made of PP (polypropylene), PE (polyethylene), etc. In addition, the electrode assembly may be of a wound structure or a laminated structure, which will not be limited in the embodiments of the present application.

For the battery cell, the battery cell generally includes a housing, an electrode assembly and an end cap. The electrode assembly is accommodated in the housing. The end cap covers an opening of the housing. The end cap and the housing together define a sealed space for accommodating the electrode assembly and an electrode solution.

In order to increase the energy density of the battery cell, the end cap is of a partially protruding structure. The end cap includes a body portion and a protrusion, the body portion is connected to the housing so that the entire end cap covers the opening of the housing. The protrusion protrudes from the body portion in a direction away from the electrode assembly, the body portion surrounds an edge of the protrusion, and an accommodating space is formed inside the protrusion to accommodate at least a part of a tab of the electrode assembly, thereby reducing the space inside the battery cell occupied by the tab and achieving the purpose of improving the energy density of the battery cell.

The inventors note that in such a battery cell, the body portion of the end cap is prone to deformation when the end cap is impacted, especially when the battery cell is inverted, the body portion is greatly deformed, resulting in pressing the electrode assembly, then damage to the electrode assembly, such as damage to the separator of the electrode assembly, and leading to a negative short circuit, which is prone to accidents such as explosion or fire of the battery cell, and there is a great safety hazard.

In view of this, embodiments of the present application provide a battery cell. A body portion of an end cap is provided with a reinforcement portion. By means of the reinforcement portion, the stiffness of the body portion is enhanced, resistance to deformation of the body portion is enhanced, and the risk of short circuits of positive and negative electrodes due to a large deformation of the body portion caused by an external force is reduced, effectively improving the safety of the battery cell.

The technical solution described in the embodiments of the present application is applicable to a battery and a power consuming apparatus using the battery.

The power consuming apparatus may be a vehicle, a mobile phone, a portable apparatus, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling electric tool, and a railway electric tool, such as an electric drill, an electric grinder, an electric wrench, an electric screwdriver, an electric hammer, an electric impact drill, a concrete vibrator, and an electric planer. The power consuming apparatuses mentioned above are not specially limited in the embodiments of the present application.

For ease of description, an example in which the power consuming apparatus refers to a vehicle is used for description in the following embodiments.

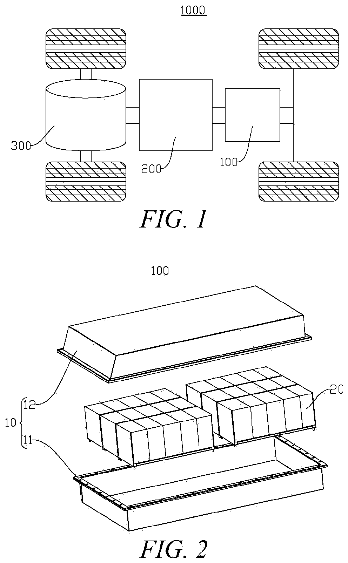

With reference to FIG. 1, FIG. 1 is a schematic structural diagram of a vehicle 1000 according to some embodiments of the present application, where a battery 100 is provided inside the vehicle 1000, and the battery 100 may be arranged at a bottom, head, or tail of the vehicle 1000. The battery 100 may be configured to supply power to the vehicle 1000. For example, the battery 100 may serve as a power supply for operating the vehicle 1000.

The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but can also serve as a power supply for driving the vehicle 1000, in place of or partially in place of fuel or natural gas, to provide driving power for the vehicle 1000.

With reference to FIG. 2, FIG. 2 is an exploded view of a battery 100 according to some embodiments of the present application, where the battery 100 includes a case 10 and a battery cell 20, and the case 10 is configured to accommodate the battery cell 20.

The case 10 herein is a component for accommodating the battery cell 20, the case 10 provides an accommodating space for the battery cell 20, and the case 10 may be of various structures. In some embodiments, the case 10 may include a first portion 11 and a second portion 12. The first portion 11 and the second portion 12 are fitted to each other in a covered manner to define the accommodating space for accommodating the battery cell 20. The first portion 11 and the second portion 12 may have various shapes such as a cuboid and a cylinder. The first portion 11 may be of a hollow structure with an open side, the second portion 12 may also be of a hollow structure with an open side, and the open side of the second portion 12 covers the open side of the first portion 11, such that the case 10 having the accommodating space is formed. Alternatively, the first portion 11 is of a hollow structure with an open side, the second portion 12 is of a plate-like structure, and the second portion 12 covers the open side of the first portion 11, such that the case 10 having the accommodating space is formed. The first portion 11 and the second portion 12 may be sealed by a sealing element, which may be a sealing ring, a sealant, etc.

In the battery 100, one or more battery cells 20 may be provided. If a plurality of battery cells 20 are provided, the plurality of battery cells 20 may be connected in series, in parallel, or in series-parallel. The series-parallel connection refers that some of the plurality of battery cells 20 are connected in series and the rest are connected in parallel. It is possible that a plurality of battery cells 20 are first connected in series or in parallel or in series-parallel to form a battery module, and a plurality of battery modules are then connected in series or in parallel or in series-parallel to form a unit and are accommodated in the case 10. It is also possible that all the battery cells 20 are directly connected in series, or in parallel, or in series-parallel, and a unit composed of all the battery cells 20 is then accommodated in the case 10.

In some embodiments, the battery 100 may further include a busbar component, and the plurality of battery cells 20 may be electrically connected by means of the busbar component, so as to implement series connection, parallel connection, or series-parallel connection of the plurality of battery cells 20. The busbar component may be a metal conductor such as a copper conductor, an iron conductor, an aluminum conductor, a stainless steel conductor, and an aluminum alloy conductor.

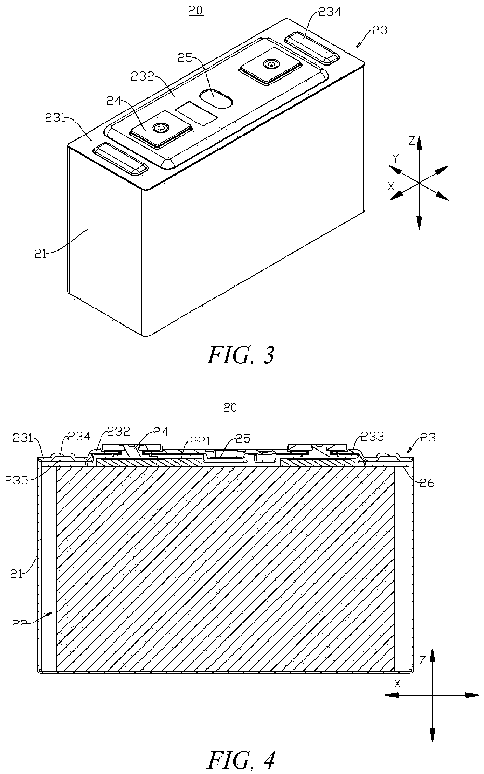

With reference to FIG. 3, FIG. 3 is a schematic structural diagram of a battery cell 20 according to some embodiments of the present application, where the battery cell 20 includes a housing 21, an electrode assembly 22 (not shown in FIG. 3), and an end cap 23.

The housing 21 is a component for accommodating the electrode assembly 22. The housing 21 may be of a hollow structure with an opening formed at one end. The housing 21 may be of a hollow structure with openings formed at opposite ends. The housing 21 may have various shapes such as a cylinder and a cuboid. The housing 21 may be made of various materials, such as copper, iron, aluminum, steel, and aluminum alloy.

The electrode assembly 22 is a component, where an electrochemical reaction occurs, in the battery cell 20. The electrode assembly 22 is provided with a tab 221 (not shown in FIG. 3), and the tab 221 is divided into a positive tab and a negative tab. The positive tab and the negative tab may be formed on the same side of the electrode assembly 22, or formed on opposite sides of the electrode assembly 22, respectively.

The end cap 23 is a component that covers the opening of the housing 21 to isolate an internal environment of the battery cell 20 from an external environment. The end cap 23 and the housing 21 together define a sealed space for accommodating the electrode assembly 22, the electrolyte and other components. The end cap 23 may be shaped to match the shape of the housing 21. For example, the housing 21 is of a cuboid structure, and the end cap 23 is of a rectangular plate-like structure matching the housing 21. For another example, the housing 21 is of a cylinder structure, and the end cap 23 is of a circular plate-like structure matching the housing 21. The end cap 23 may be made of various materials, such as copper, iron, aluminum, steel, and aluminum alloy.

In the battery cell 20, one or two end caps 23 may be provided. If the housing 21 is of a hollow structure with an opening formed at one end, one end cap 23 is correspondingly provided. If the housing 21 is of a hollow structure with openings formed at two ends, two end caps 23 are correspondingly provided, and the two end caps 23 respectively cover the two openings of the housing 21.

The end cap 23 may be provided with an electrode terminal 24. The electrode terminal 24 is configured to be electrically connected to the tab 221, so as to output electric energy of the battery cell 20. The electrode terminal 24 may include a positive electrode terminal and a negative electrode terminal. The positive electrode terminal is configured to be electrically connected to the positive tab, and the negative electrode terminal is configured to be electrically connected to the negative tab. The positive electrode terminal and the negative electrode terminal may be arranged on the same end cap 23 or on different end caps 23. For example, the housing 21 is of a hollow structure with openings formed at two ends, two end caps 23 are provided in the battery cell 20, the two end caps 23 cover the two openings of the housing 21, respectively, the negative electrode terminal is arranged on one of the end caps 23, and the positive electrode terminal is arranged on the other end cap 23. For another example, as shown in FIG. 3, the housing 21 is of a hollow structure with an opening formed at one end, one end cap 23 is provided in the battery cell 20, and the negative electrode terminal and the positive electrode terminal may be arranged on the same end cap 23.

The positive electrode terminal may be directly or indirectly connected to the positive tab, and the negative electrode terminal may be directly or indirectly connected to the negative tab. Illustratively, the positive electrode terminal is indirectly connected to the positive tab by means of a current collecting member, and the negative electrode terminal is indirectly connected to the negative tab by means of another current collecting member.

A pressure relief mechanism 25 may be also provided on the end cap 23. The pressure relief mechanism 25 is configured to relieve internal pressure of the battery cell 20 when the internal pressure or temperature of the battery cell 20 reaches a threshold. The pressure relief mechanism 25 may be a component such as an explosion-proof valve, an explosion-proof plate, and a safety valve.

With continued reference to FIG. 4, FIG. 4 is a cross-sectional view of the battery cell 20 shown in FIG. 3. An embodiment of the present application provides a battery cell 20, the battery cell 20 including a housing 21, an electrode assembly 22, and an end cap 23. The housing 21 is provided with an opening. The electrode assembly 22 is accommodated in the housing 21, and the electrode assembly 22 is provided with a tab 221. The end cap 23 is configured to cover the opening. The end cap 23 includes a first body portion 231 and a first protrusion 232. The first body portion 231 surrounds an edge of the first protrusion 232. The first body portion 231 is configured to be connected to the housing 21. In a thickness direction Z of the end cap 23, the first protrusion 232 protrudes relative to the first body portion 231 in a direction away from the electrode assembly 22. A first accommodating space 233 is formed inside the first protrusion 232, the first accommodating space 233 being configured to accommodate at least a part of the tab 221. The first body portion 231 is provided with a reinforcement portion 234, the reinforcement portion 234 being configured to enhance the stiffness of the first body portion 231.

The first body portion 231 is the part of the end cap 23 surrounding the first protrusion 232 and connected to the housing 21. The first body portion 231 may be welded to the housing 21, and the welding path may extend along the circumference of the opening of the housing 21. The first body portion 231 may be of various structures, such as a rectangular structure, and a circular structure.

The first protrusion 232 may also be of various structures, such as a rectangular structure, and a circular structure. If the first body portion 231 is of a rectangular structure, the first protrusion 232 may be configured as a rectangular structure, and the end cap 23 of such a structure is applicable to a prismatic battery cell. If the second body portion 262 is of a circular structure, the first protrusion 232 may be configured as a circular structure, and the end cap 23 of such a structure is applicable to a cylindrical battery cell. In an embodiment where the end cap 23 is provided with the electrode terminal 24, the electrode terminal 24 may be arranged on the first body portion 231 or on the first protrusion 232.

The first accommodating space 233 is formed inside the first protrusion 232. The first accommodating space 233 is provided with a first opening on the side of the first body portion 231 facing the electrode assembly 22. The tab 221 of the electrode assembly 22 may enter the first accommodating space 233 through the first opening.

The tab 221 may be the positive tab or the negative tab of the electrode assembly 22. In an embodiment where the positive tab and the negative tab are formed at the same end of the electrode assembly 22, it is possible that both the positive tab and the negative tab are at least partially accommodated in the first accommodating space 233. In an embodiment where the positive tab and the negative tab are respectively formed at opposite ends of the electrode assembly 22, it is possible that the positive tab is at least partially accommodated in the first accommodating space 233 or the negative tab is at least partially accommodated in the first accommodating space 233.

The reinforcement portion 234 is a structure provided on the first body portion 231 to enhance the strength of the first body portion 231. The reinforcement portion 234 may be of various structures, for example, the reinforcement portion 234 is a protrusion protruding from the first body portion 231, and for another example, the reinforcement portion 234 is a cavity provided inside the first body portion 231. The reinforcement portion 234 may also be of various shapes, such as rectangular, circular, and ringshaped.

In an embodiment of the present application, the first body portion 231 of the end cap 23 is provided with the reinforcement portion 234, which improves the stiffness of the first body portion 231, enhances resistance to deformation of the first body portion 231, and reduces the risk of short circuits of positive and negative electrodes due to a large deformation of the first body portion 231 caused by an external force, thereby effectively improving the safety of the battery cell 20.

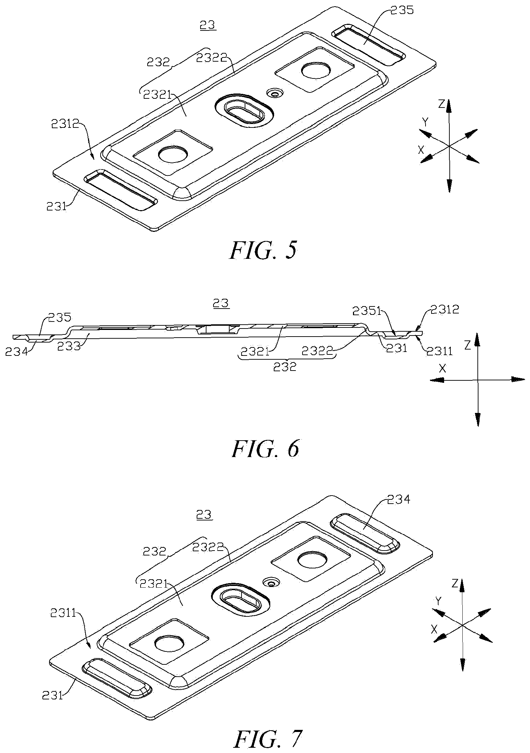

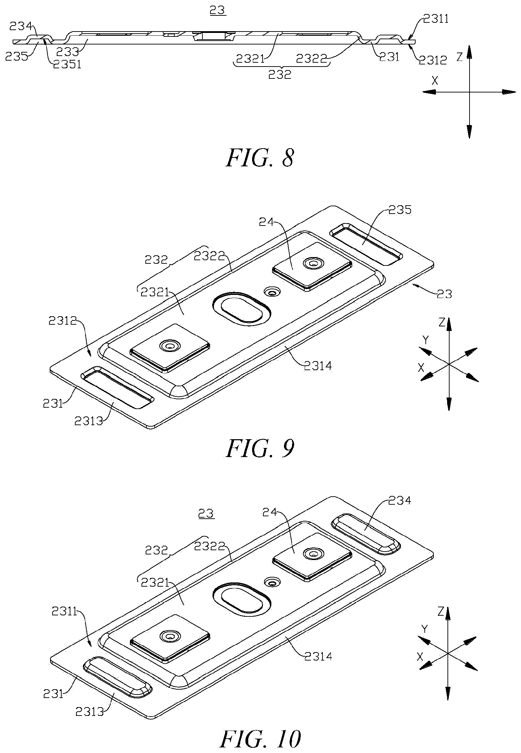

In some embodiments, with reference to FIG. 5 to FIG. 8, FIG. 5 is a schematic structural diagram of an end cap 23 according to some embodiments of the present application; FIG. 6 is a cross-sectional view of the end cap 23 shown in FIG. 5; FIG. 7 is a schematic structural diagram of an end cap 23 according to some other embodiments of the present application; and FIG. 8 is a cross-sectional view of the end cap 23 shown in FIG. 7. The first body portion 231 has a second surface 2312 opposite a first surface 2311 in the thickness direction Z of the end cap 23. The reinforcement portion 234 protrudes from the first surface 2311. The first body portion 231 is provided with a first recess 235 at a position corresponding to the reinforcement portion 234. The first recess 235 is recessed from the second surface 2312 in a direction from the second surface 2312 to the first surface 2311.

It is possible that the first surface 2311 is an outer surface of the first body portion 231 and the second surface 2312 is an inner surface of the first body portion 231. It is also possible that the first surface 2311 is the inner surface of the first body portion 231 and the second surface 2312 is the outer surface of the first body portion 231. If the first surface 2311 is the outer surface of the first body portion 231 and the second surface 2312 is the inner surface of the first body portion 231, the direction from the second surface 2312 to the first surface 2311 is a direction of the first body portion 231 facing away from the electrode assembly 22 (as shown in FIG. 4). If the second surface 2312 is the outer surface of the first body portion 231 and the first surface 2311 is the inner surface of the first body portion 231, the direction from the second surface 2312 to the first surface 2311 is a direction of the first body portion 231 facing the electrode assembly 22.

The first recess 235 may match the first protrusion 232 in shape.

In this embodiment, the first body portion 231 is provided with the first recess 235 at the position corresponding to the reinforcement portion 234, so that the stiffness of the first body portion 231 can be effectively improved. During forming, the first recess 235 and the reinforcement portion 234 may be formed by means of stamping, that is, the reinforcement portion 234 protruding from the first surface 2311 is formed while the first recess 235 is formed on the second surface 2312 by means of stamping.

In some embodiments, the first recess 235 partially extends beyond the first surface 2311 in the direction from the second surface 2312 to the first surface 2311.

It is to be understood that the first recess 235 partially extends into the reinforcement portion 234. The first recess 235 has a first bottom surface 2351, and the first bottom surface 2351 is the surface of the first recess 235 at the deepest location. The first recess 235 partially extends beyond the first surface 2311 in the direction from the second surface 2312 to the first surface 2311, that is, the first bottom surface 2351 is further away from the second surface 2312 than the first surface 2311. Illustratively, the first bottom surface 2351 is a planar surface perpendicular to the thickness direction Z of the end cap 23.

In this embodiment, the first recess 235 partially extends beyond the first surface 2311 so that the first recess 235 is partially recessed into the reinforcement portion 234, thereby increasing a recess depth of the first recess 235, and enabling the first recess 235 to provide more deformation space for the reinforcement portion 234.

In some embodiments, with reference to FIG. 6, the first surface 2311 is the inner surface of the first body portion 231 facing the electrode assembly 22 (shown in FIG. 4), and the second surface 2312 is the outer surface of the first body portion 231 facing away from the electrode assembly 22.

The inner surface and the outer surface of the first body portion 231 are arranged opposite each other in the thickness direction Z of the end cap 23, and each of the inner surface and the outer surface of the first body portion 231 may be a planar surface. As an example, the first body portion 231 is of a flat-plate structure, and a thickness of the first body portion 231 is a distance between the inner surface and the outer surface of the first body portion 231.

In this embodiment, the first surface 2311 is the inner surface of the first body portion 231, that is, the reinforcement portion 234 protrudes from the inner surface of the first body portion 231, the reinforcement portion 234 is located inside the battery cell 20, and the reinforcement portion 234 does not occupy an external space of the battery cell 20, thereby reducing a volume of the battery cell 20.

In some embodiments, with reference to FIG. 8, the second surface 2312 is the inner surface of the first body portion 231 facing the electrode assembly 22 (shown in FIG. 4), and the first surface 2311 is the outer surface of the first body portion 231 facing away from the electrode assembly 22.

In this embodiment, the first surface 2311 is the outer surface of the first body portion 231, that is, the reinforcement portion 234 protrudes from the outer surface of the first body portion 231, the reinforcement portion 234 is located outside the battery cell 20, and the reinforcement portion 234 does not occupy an external space of the battery cell 20, so that more space is available for the electrode assembly 22, facilitating the improvement of energy density of the battery cell 20. In addition, since the second surface 2312 is the inner surface of the first body portion 231, the first recess 235 is recessed from the inner surface of the first body portion 231 in a direction from the inner surface to the outer surface of the first body portion 231, the first recess 235 can provide a deformation space for the reinforcement portion 234, and even if the reinforcement portion 234 is greatly deformed inward due to an impact, it is less prone to damage to the electrode assembly 22, further reducing the risk of short circuits of positive and negative electrodes.

In some embodiments, with reference to FIG. 5 to FIG. 8, the first protrusion 232 includes an end wall 2321 and a peripheral wall 2322. In the thickness direction Z of the end cap 23, the end wall 2321 is further away from the electrode assembly 22 than the first body portion 231 (shown in FIG. 4). The peripheral wall 2322 surrounds an edge of the end wall 2321, the peripheral wall 2322 is connected to the first body portion 231, and the peripheral wall 2322 and the end wall 2321 together define the first accommodating space 233.

The end wall 2321 and the peripheral wall 2322 together form the first protrusion 232, and the first body portion 231, the peripheral wall 2322 and the end wall 2321 may be of a one-piece molded structure. The end wall 2321 and the peripheral wall 2322 may have various shapes, such as a circular structure, and a rectangular structure. If each of the end wall 2321 and the peripheral wall 2322 is of a circular structure, each of the first protrusion 232 and the first accommodating space 233 is of a circular structure; and if each of the end wall 2321 and the peripheral wall 2322 is of a rectangular structure, each of the first protrusion 232 and the first accommodating space 233 is of a rectangular structure. The thicknesses of the first body portion 231, the peripheral wall 2322 and the end wall 2321 may be equal or different.

In this embodiment, the peripheral wall 2322 and the end wall 2321 together define the first accommodating space 233, and the end wall 2321 is further away from the electrode assembly 22 than the first body portion 231. This structure expands the first accommodating space 233 and enables the first accommodating space to accommodate more part of the tab 221 of the electrode assembly 22, thereby facilitating the improvement of energy density of the battery cell 20.

In some embodiments, the first body portion 231 has a thickness greater than that of the end wall 2321; and/or, the first body portion 231 has a thickness greater than that of the peripheral wall 2322.

It is to be understood that, in an embodiment where the first body has a thickness greater than that of the end wall 2321, the thickness of the first body portion 231 may be less than, equal to, or greater than that of the peripheral wall 2322. In an embodiment where the first body portion has a thickness greater than that of the peripheral wall 2322, the thickness of the first body portion 231 may be less than, equal to, or greater than that of the end wall 2321.

Illustratively, the thickness of the end wall 2321 is equal to that of the peripheral wall 2322, and the thickness of each of the end wall 2321 and the peripheral wall 2322 is less than that of the first body portion 231.

The first body portion 231 has a thickness greater than that of the end wall 2321, so that the first body portion 231 has a stronger resistance to deformation than the end wall 2321 and is less prone to deformation. Similarly, the first body portion 231 has a thickness greater than that of the peripheral wall 2322, so that the first body portion 231 has a stronger resistance to deformation than the peripheral wall 2322 and is less prone to deformation.

In some embodiments, with continued reference to FIG. 9 and FIG. 10, FIG. 9 is an assembly diagram of an end cap 23 and an electrode terminal 24 according to some embodiments of the present application; and FIG. 10 is an assembly diagram of an end cap 23 and an electrode terminal 24 according to some other embodiments of the present application. The battery cell 20 further includes the electrode terminal 24. The electrode terminal 24 is configured to be electrically connected to the tab 221 (shown in FIG. 4). The electrode terminal 24 is arranged on the end wall 2321.

It is to be understood that the electrode terminal 24 is located on the first protrusion 232. In the battery cell 20, one or two electrode terminals 24 may be provided.

As an example, two electrode terminals 24 are provided in the battery cell 20, and the two electrode terminals 24 are both mounted on the end wall 2321. The two electrode terminals 24 are respectively a positive electrode terminal and a negative electrode terminal. The positive electrode terminal and the negative electrode terminal are electrically connected to the positive tab and the negative tab of the electrode assembly 22 (shown in FIG. 4), respectively. As an example, the first body portion 231 of the end cap 23 is rectangular, and the two electrode terminals 24 may be arranged spaced apart from each other in a length direction X of the end cap 23.

In this embodiment, the electrode terminals 24 of the battery cell 20 are arranged on the end wall 2321, and the electrode terminals 24 do not occupy the space of the first body portion 231, thereby facilitating the arrangement of the reinforcement portion 234 on the first body portion 231 and improving the stiffness of the first body portion 231.

In some embodiments, with continued reference to FIG. 9 and FIG. 10, the first body portion 231 includes two first edge portions 2313 and two second edge portions 2314. The two first edge portions 2313 are respectively located on two sides of the first protrusion 232 in the length direction X of the end cap 23, and the two second edge portions 2314 are respectively located on two sides of the first protrusion 232 in a width direction Y of the end cap 23. The first edge portions 2313 have a dimension in the length direction X larger than the dimension of the second edge portions 2314 in the width direction Y. At least one of the first edge portions 2313 is provided with the reinforcement portion 234.

The first edge portions 2313 and the second edge portions 2314 are parts of the first body portion 231 located at the edge of the first protrusion 232. The two first edge portions 2313 and the two second edge are located around the first protrusion 232. One of the first edge portions 2313, one of the second edge portions 2314, the other first edge portion 2313, and the other second edge portion 2314 are connected end to end in sequence to form a closed-loop structure. The two first edge portions 2313 are arranged opposite each other in the length direction X of the end cap 23, and the two second edge portions are arranged opposite each other in the width direction Y of the end cap 23, so that the first body portion 231 has a rectangular structure as a whole.

It should be noted that at least one of the first edge portions 2313 is provided with the reinforcement portion 234, either only one first edge portion 2313 may be provided with the reinforcement portion 234, or each of the two first edge portions may be provided with the reinforcement portion 234. There may be one or more reinforcement portions 234 on the first edge portion 2313. Of course, that at least one of the first edge portions 2313 being provided with the reinforcement portion 234 does not mean that the second edge portion 2314 may not be provided with the reinforcement portion 234, and in the case where at least one of the first edge portions 2313 is provided with the reinforcement portion 234, the second edge portion 2314 may be provided with the reinforcement portion 234 or may not be provided with the reinforcement portion 234.

As an example, the reinforcement portion 234 on the first reinforcement portion 234 is a rectangular protrusion, and the first reinforcement portion 234 may extend along a plurality of directions. For example, the first reinforcement portion 234 extends in the length direction X of the end cap 23, and for another example, the first reinforcement portion 234 extends in the width direction Y of the end cap 23.

In this embodiment, since the first edge portion 2313 has a dimension in the length direction X of the end cap 23 larger than the dimension of the second edge portion 2314 in the width direction Y of the end cap 23, the first edge portion 2313 is more prone to deformation than the second edge portion 2314. Thus, at least one of the first edge portions 2313 is provided with the reinforcement portion 234 to enhance the stiffness of the first edge portion 2313.

In some embodiments, each of the two first edge portions 2313 is provided with the reinforcement portion 234, thereby improving the stiffness of the two first edge portions 2313 and making the parts of the end cap 23 located on two sides of the first protrusion 232 in the length direction X of the end cap less prone to deformation.

In some embodiments, the reinforcement portion 234 extends in the width direction Y.

Illustratively, the reinforcement portion 234 is a rectangular protrusion protruding from the first body portion 231. In FIG. 9, the reinforcement portion 234 is a rectangular protrusion protruding from the inner surface of the first body portion 231. In FIG. 10, the reinforcement portion 234 is a rectangular protrusion protruding from the outer surface of the first body portion 231.

In this embodiment, the reinforcement portion 234 extends in the width direction Y of the end cap 23, thereby increasing the span of the reinforcement portion 234 in the width direction Y of the end cap 23, and further improving the stiffness of the first edge portion 2313.

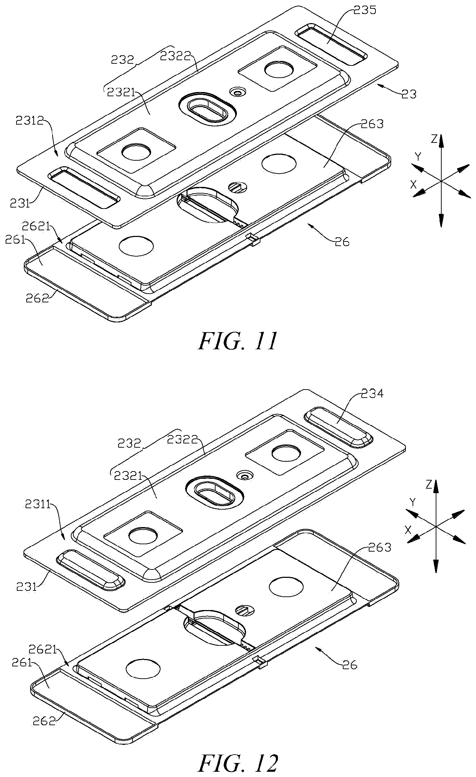

In some embodiments, with reference to FIG. 11 and FIG. 12, FIG. 11 is an exploded view of an end cap 23 and an insulator 26 according to some embodiments of the present application, and FIG. 12 is an exploded view of an end cap 23 and an insulator 26 according to some other embodiments of the present application. The battery cell 20 further includes the insulator 26. The insulator 26 is located on the side of the electrode assembly 22 (shown in FIG. 4) facing the end cap 23 for insulating the end cap 23 from the electrode assembly 22.

The insulator 26 plays a role in separating the end cap 23 from the electrode assembly 22, and the insulator 26 is made of an insulating material, such as rubber, and plastic.

The insulator 26 is arranged between the end cap 23 and the electrode assembly 22, thus realizing insulation between the end cap 23 and the electrode assembly 22 and reducing the risk of short circuits of positive and negative electrodes due to overlapping between the electrode assembly 22 and the end cap 23.

In some embodiments, in the thickness direction Z of the end cap 23, a second recess 261 is provided on the side of the insulator 26 facing the first body portion 231 at a position corresponding to the reinforcement portion 234.

The second recess 261 may match the first recess 235 in shape. With reference to FIG. 11, in an embodiment where the reinforcement portion 234 protrudes from the inner surface (not shown in FIG. 11) of the first body portion 231, it is possible that the reinforcement portion 234 is at least partially accommodated in the first recess 235, and there is a distance between the reinforcement portion 234 and a bottom surface of the second recess 261 to provide a space for the reinforcement portion 234 to deform toward the interior of the battery cell 20. With reference to FIG. 12, in an embodiment where the reinforcement portion 234 protrudes from the outer surface of the first body portion 231, the reinforcement portion 234 is not located in the second recess 261, and when the reinforcement portion 234 is deformed toward the interior of the battery cell 20 due to an impact, the deformed reinforcement portion 234 may be accommodated in the second recess 261.

In this embodiment, the second recess 261 on the insulator 26 can provide a deformation space for the reinforcement portion 234 to deform toward the interior of the battery cell 20, reducing the risk of short circuits of positive and negative electrodes caused by the deformation of the reinforcement portion 234, which results in pressing the insulator 26 and then damage to the electrode assembly 22 by the insulator 26.

In some embodiments, with continued reference to FIG. 11 and FIG. 12, the insulator 26 includes a second body portion 262 and a second protrusion 263. The second body portion 262 surrounds an edge of the second protrusion 263. In the thickness direction Z of the end cap 23, the second body portion 262 is located on the side of the first body portion 231 facing the electrode assembly 22 (shown in FIG. 4), and the second protrusion 263 protrudes relative to the second body portion 262 in a direction away from the electrode assembly 22. The second protrusion 263 is at least partially accommodated in the first accommodating space 233. A second accommodating space is formed inside the second protrusion 263 and is configured to accommodate at least a part of the tab 221.

The second recess 261 is arranged on the second body portion 262. In the thickness direction Z of the end cap 23, the second body portion 262 has a third surface 2621 facing the first body portion 231. The second recess 261 is recessed from the third surface 2621 toward the electrode assembly 22.

The second body portion 262 is the part of the insulator 26 surrounding the second protrusion 263, and the second body portion 262 plays a role in separating the first body portion 231 from the electrode assembly 22. The second body portion 262 may match the first body portion 231 in shape.

The second protrusion 263 may match the first protrusion 232 in shape. The second protrusion 263 is at least partially accommodated in the first accommodating space 233, and the second protrusion 263 plays a role in separating the first protrusion 232 from the electrode assembly 22.

The second accommodating space is formed inside the second protrusion 263. The second accommodating space is provided with a second opening on the side of the second body portion 262 facing the electrode assembly 22. The tab 221 of the electrode assembly 22 may enter the second accommodating space through the second opening.

In this embodiment, the second protrusion 263 of the insulator 26 is at least partially accommodated in the first accommodating space 233, which reduces the overall dimension of the insulator 26 and the end cap 23 in the thickness direction Z of the end cap 23, making the structure of the insulator 26 and the end cap 23 more compact. The second accommodating space is formed inside the second protrusion 263, and at least a part of the tab 221 is accommodated in the second accommodating space, so that the space inside the housing 21 occupied by the tab 221 is reduced and more space is available for a main body portion of the electrode assembly 22, thereby facilitating the improvement of energy density of the battery cell 20.

An embodiment of the present application provides a battery 100, including a case 10 and a battery cell 20 provided in any one of the above embodiments, the case 10 being configured to accommodate the battery cell 20.

An embodiment of the present application provides a power consuming apparatus, including a battery 100 provided in any one of the embodiments described above.

The power consuming apparatus may be any one of the aforementioned apparatuses using the battery 100.

In addition, with reference to FIG. 3 and FIG. 4, an embodiment of the present application provides a prismatic battery cell, including a housing 21, an electrode assembly 22, an end cap 23, and an insulator 26. The electrode assembly 22 is accommodated in the housing 21, an opening is formed at one end of the housing 21, the end cap 23 covers the opening of the housing 21, and the insulator 26 is configured to separate the end cap 23 from the electrode assembly 22. The end cap 23 is of a rectangular structure. The end cap 23 includes a first body portion 231 and a first protrusion 232. The first body portion 231 surrounds an edge of the first protrusion 232. The first body portion 231 is configured to be welded to the housing 21. In a thickness direction Z of the end cap 23, the first protrusion 232 protrudes relative to the first body portion 231 in a direction away from the electrode assembly 22. A first accommodating space 233 is formed inside the first protrusion 232, the first accommodating space 233 being configured to accommodate a part of a tab 221. A reinforcement portion 234 is provided on an outer surface of the first body portion 231. The first body portion 231 is provided with a first recess 235 at a position corresponding to the reinforcement portion 234. A second recess 261 is recessed from an inner surface of the first body portion 231 in a direction away from the electrode assembly 22.

In such a directional battery cell 20, the first body portion 231 is provided with the reinforcement portion 234, which improves the stiffness of the first body portion 231, enhances resistance to deformation of the first body portion 231, and reduces the risk of short circuits of positive and negative electrodes due to a large deformation of the first body portion 231 caused by an external force, thereby effectively improving the safety of the battery cell 20. The reinforcement portion 234 is arranged on the outer surface of the first body portion 231, the reinforcement portion 234 does not occupy an internal space of the battery cell 20, so that more space is available for the electrode assembly 22, facilitating the improvement of energy density of the battery cell 20. In addition, the first recess 235 can provide a deformation space for the reinforcement portion 234, and even if the reinforcement portion 234 is greatly deformed inward due to an impact, it is less prone to damage to the electrode assembly 22, further reducing the risk of short circuits of positive and negative electrodes.

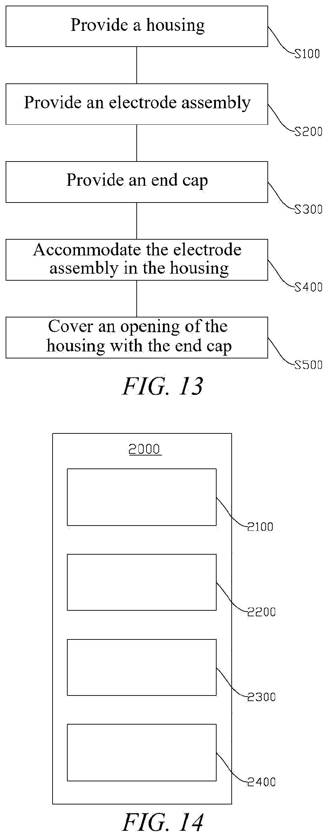

With reference to FIG. 13, FIG. 13 is a flow chart of a method for manufacturing a battery cell 20 according to some embodiments of the present application. An embodiment of the present application provides a method for manufacturing a battery cell 20. The manufacturing method includes the flowing steps.

At step S100, a housing 21 is provided, the housing 21 being provided with an opening.

At step S200, an electrode assembly 22 is provided, the electrode assembly 22 being provided with a tab 221.

At step S300, an end cap 23 is provided.

At step S400: the electrode assembly 22 is accommodated in the housing 21.

At step S500: the opening of the housing 21 is covered with the end cap 23.

The end cap 23 includes a first body portion 231 and a first protrusion 232. The first body portion 231 surrounds an edge of the first protrusion 232. The first body portion 231 is configured to be connected to the housing 21. In a thickness direction Z of the end cap 23, the first protrusion 232 protrudes relative to the first body portion 231 in a direction away from the electrode assembly 22. A first accommodating space 233 is formed inside the first protrusion 232, the first accommodating space 233 being configured to accommodate at least a part of the tab 221. The first body portion 231 is provided with a reinforcement portion 234, the reinforcement portion 234 being configured to enhance the stiffness of the first body portion 231.

In the method, step S100, step S200, and step S300 are not limited. For example, step S300 may be performed first, then step S200 is performed, and then step S 100 is performed.

It should be noted that a related structure of the battery cell 20 manufactured through the manufacturing method provided in the above embodiments can refer to the battery cell 20 provided in the foregoing embodiments, and details are not repeated herein.

With reference to FIG. 14, FIG. 14 is a schematic block diagram of an apparatus 2000 for manufacturing a battery cell 20 according to some embodiments of the present application. An embodiment of the present application provides an apparatus 2000 for manufacturing a battery cell 20, the manufacturing apparatus 2000 including a first provision device 2100, a second provision device 2200, a third provision device 2300, and an assembly device 2400.

The first provision device 2100 is configured to provide a housing 21, the housing 21 being provided with an opening. The second provision device 2200 is configured to provide an electrode assembly 22, the electrode assembly 22 being provided with a tab 221. The third provision device 2300 is configured to provide an end cap 23. The assembly device 2400 is configured to accommodate the electrode assembly 22 in the housing 21, and the assembly device 2400 is further configured to cover the opening with the end cap 23.

The end cap 23 includes a first body portion 231 and a first protrusion 232. The first body portion 231 surrounds an edge of the first protrusion 232. The first body portion 231 is configured to be connected to the housing 21. In a thickness direction Z of the end cap 23, the first protrusion 232 protrudes relative to the first body portion 231 in a direction away from the electrode assembly 22. A first accommodating space 233 is formed inside the first protrusion 232, the first accommodating space 233 being configured to accommodate at least a part of the tab 221. The first body portion 231 is provided with a reinforcement portion 234, the reinforcement portion 234 being configured to enhance the stiffness of the first body portion 231.

It should be noted that a related structure of the battery cell 20 manufactured through the manufacturing apparatus 2000 provided in the above embodiments may refer to the battery cell 20 provided in the foregoing embodiments, and details are not repeated herein.

It should be noted that the embodiments in the present application and features in the embodiments may be combined with each other without conflicts.

The above embodiments are only used to explain the technical solutions of the present application, and are not intended to limit the present application, and various modifications and changes of the present application may be made by those skilled in the art. Any modifications, equivalent substitutions, improvements, and the like made within the spirit and principle of the present application should fall within the scope of protection of the present application.

## Claims

1. A battery cell, comprising:
a housing provided with an opening;
an electrode assembly accommodated in the housing and provided with a tab; and
an end cap configured to cover the opening, the end cap comprising a first body portion and a first protrusion, the first body portion surrounding an edge of the first protrusion and being configured to connected to the housing, the first protrusion protruding relative to the first body portion in a direction away from the electrode assembly in a thickness direction of the end cap, and a first accommodating space being formed inside the first protrusion and being configured to accommodate at least a part of the tab,
wherein the first body portion is provided with a reinforcement portion, the reinforcement portion being configured to enhance the stiffness of the first body portion.

2. The battery cell according to claim 1, wherein the first body portion has a second surface opposite a first surface in the thickness direction of the end cap; and
the reinforcement portion protrudes from the first surface, the first body portion is provided with a first recess at a position corresponding to the reinforcement portion, and the first recess is recessed from the second surface in a direction from the second surface to the first surface.

3. The battery cell according to claim 2, wherein the first recess partially extends beyond the first surface in the direction from the second surface to the first surface.

4. The battery cell according to claim 2 or 3, wherein the first surface is an inner surface of the first body portion facing the electrode assembly, and the second surface is an outer surface of the first body portion facing away from the electrode assembly.

5. The battery cell according to claim 2 or 3, wherein the second surface is an inner surface of the first body portion facing the electrode assembly, and the first surface is an outer surface of the first body portion facing away from the electrode assembly.

6. The battery cell according to any one of claims 1-5, wherein the first protrusion comprises an end wall and a peripheral wall;
the end wall is further away from the electrode assembly than the first body portion in the thickness direction of the end cap; and
the peripheral wall surrounds an edge of the end wall and is connected to the first body portion, and the peripheral wall and the end wall together define the first accommodating space.

7. The battery cell according to claim 6, wherein the first body portion has a thickness greater than that of the end wall; and/or, the first body portion has a thickness greater than that of the peripheral wall.

8. The battery cell according to claim 6 or 7, further comprising an electrode terminal, the electrode terminal being configured to be electrically connected to the tab and being arranged on the end wall.

9. The battery cell according to any one of claims 1-8, wherein the first body portion comprises two first edge portions and two second edge portions, the two first edge portions being respectively located on two sides of the first protrusion in a length direction of the end cap, the two second edge portions being respectively located on two sides of the first protrusion in a width direction of the end cap, and the first edge portion having a dimension in the length direction larger than the dimension of the second edge portion in the width direction; and
wherein at least one of the first edge portions is provided with the reinforcement portion.

10. The battery cell according to claim 9, wherein each of the two first edge portions is provided with the reinforcement portion.

11. The battery cell according to claim 9 or 10, wherein the reinforcement portion extends in the width direction.

12. The battery cell according to any one of claims 1-11, further comprising an insulator, the insulator being located on the side of the electrode assembly facing the end cap for insulating the end cap from the electrode assembly.

13. The battery cell according to claim 12, wherein in the thickness direction of the end cap, a second recess is provided on the side of the insulator facing the first body portion at a position corresponding to the reinforcement portion.

14. The battery cell according to claim 13, wherein the insulator comprises a second body portion and a second protrusion;
the second body portion surrounds an edge of the second protrusion, in the thickness direction of the end cap, the second body portion is located on the side of the first body portion facing the electrode assembly, and the second protrusion protrudes relative to the second body portion in the direction away from the electrode assembly, the second protrusion is at least partially accommodated in the first accommodating space, and a second accommodating space is formed inside the second protrusion and is configured to accommodate at least a part of the tab; and
the second recess is arranged on the second body portion, the second body portion has a third surface facing the first body portion in the thickness direction of the end cap, and the second recess is recessed from the third surface toward the electrode assembly.

15. A battery, comprising:
a battery cell according to any one of claims 1-14; and
a case configured to accommodate the battery cell.

16. A power consuming apparatus, comprising a battery according to claim 15.

17. A method for manufacturing a battery cell, the method comprising:
providing a housing provided with an opening;
providing an electrode assembly provided with a tab;
providing an end cap;
accommodating the electrode assembly in the housing; and
covering the opening with the end cap,
wherein the end cap comprises a first body portion and a first protrusion, the first body portion surrounds an edge of the first protrusion and is configured to be connected to the housing, the first protrusion protrudes relative to the first body portion in a direction away from the electrode assembly in a thickness direction of the end cap, a first accommodating space is formed inside the first protrusion and is configured to accommodate at least a part of the tab, and the first body portion is provided with a reinforcement portion, the reinforcement portion being configured to enhance the stiffness of the first body portion.

18. An apparatus for manufacturing a battery cell, the apparatus comprising:
a first provision device configured to provide a housing provided with an opening;
a second provision device configured to provide an electrode assembly provided with a tab;
a third provision device configured to provide an end cap; and
an assembly device configured to accommodate the electrode assembly in the housing, and further configured to cover the opening with the end cap,
wherein the end cap comprises a first body portion and a first protrusion, the first body portion surrounds an edge of the first protrusion and is configured to be connected to the housing, the first protrusion protrudes relative to the first body portion in a direction away from the electrode assembly in a thickness direction of the end cap, a first accommodating space is formed inside the first protrusion and is configured to accommodate at least a part of the tab, and the first body portion is provided with a reinforcement portion, the reinforcement portion being configured to enhance the stiffness of the first body portion.
